# EUROPEAN PATENT APPLICATION

(11) **EP 0 619 440 A1**
(43) Date of publication of application: **12.10.1994**
(21) Application number: 94105100.5
(22) Date of filing: 31.03.1994
(51) Int. Cl.: F16F 1/36, F16F 3/08

(54) **Vibration damping method**

(30) Priority: 08.04.1993 US 44633
(71) Applicant: MINNESOTA MINING AND MANUFACTURING COMPANY, St. Paul, Minnesota 55133-3427 (US)
(72) Inventor: Mccutcheon, Jeffrey W., c/o Minnesota Mining and, St. Paul, Minnesota 55133-3427 (US); Nelson, A. Dwayne, c/o Minnesota Mining and, St. Paul, Minnesota 55133-3427 (US)
(74) Representative: Hilleringmann, Jochen, Dipl.-Ing.

(57) **Abstract**

A method of vibrationally damping an article subject to resonant vibrations comprises applying to the article a vibration damping structure that comprises a first vibration damping material and a second vibration damping material different from the first vibration damping material. The first and second vibration damping materials are arranged in a single layer and each is in direct mechanical contact with the article.

## Description

### BACKGROUND OF THE INVENTION

### Field of the Invention

This invention relates generally to a method for vibrationally damping an article subject to resonant vibrations and, more particularly, to a method of using a single layer of at least two different vibration damping materials to provide damping over a broad temperature range.

### Description of the Related Art

A myriad of articles as diverse as motor vehicle engine components and computer hardware may be subject to undesirable resonant vibrations. Consequently, it is often desirable to attenuate the resonant vibrations by providing the article with a damping structure. Typical vibration damping structures comprise a viscoelastic material for so-called free-layer vibration damping. The viscoelastic material can be supplemented with an optional, relatively stiff constraining layer to provide constrained layer damping.

Articles such as those mentioned above may experience resonant vibrations over a wide temperature range. For example, motor vehicle engine components may experience extremely cold temperatures well below freezing in certain northern climates as well as much higher temperatures in desert environments or when the engine is in use. Resistance to shock, especially at lower temperatures, may also be important; low temperature shock can lead to delamination of the damping material. However, it may be difficult for a single vibration damping material to provide the requisite damping (and shock resistance if needed) over the temperature range to which the article may be exposed.

One presently known solution to this problem is to use two different damping materials, one to provide damping at lower temperatures, and the other to provide damping at higher temperatures. Conventionally, the two damping materials are arranged in a multilayer configuration with only one of the two materials (typically the high temperature damping material) in direct mechanical contact with the article to be damped. However, at low temperatures, this damping material may be susceptible to shock type mechanical failure. In extreme cases, the vibration damping structure may fall off.

While adhesives or mechanical tabs may be used to further secure the damping materials to the article, this increases manufacturing and application complexity, adds weight, increases cost, and may be impractical in situations where there is limited space for these additional components. Placing the low temperature damping material, rather than the high temperature damping material, in direct mechanical contact with the article is an alternative but is believed to provide less efficient damping.

Accordingly, there is considerable need for a vibration damping method that does not use multiple layers of damping material or attachment aids such as adhesives or mechanical tabs, especially if the method permits vibration damping over a broad temperature range.

### SUMMARY OF THE INVENTION

In one aspect, this invention relates generally to a method of vibrationally damping an article subject to resonant vibrations. The method comprises a step of applying to the article a vibration damping structure that comprises first and second vibration damping materials that are different from each other. The first and second vibration damping materials are arranged in a single layer and each is in direct mechanical contact with the article. By providing the first and second vibration damping materials in a single layer, a lower weight, lower profile construction, relative to one which uses multiple layers of vibration damping material, is possible. Furthermore, because each vibration damping material is in direct mechanical contact with the article to be damped, each material directly imparts its damping properties to the article. Direct mechanical contact includes the use of a stiff, rigid mechanical standoff to which the damping materials are secured.

For example, one of the vibration damping materials may provide damping at relatively elevated temperatures while the other imparts low temperature shock resistance. Alternatively, each vibration damping material may damp the article over a different portion of a broad temperature range. Preferably, the different portions of the temperature range overlap.

Consequently, in another aspect, the invention also relates to a method of vibrationally damping an article subject to resonant vibrations over a temperature range that extends from a lower temperature to an upper temperature by applying first and second vibration damping materials to the article in a single layer. Each is in direct mechanical contact with the article. The first material vibrationally damps the article over only a first portion of the temperature range and the second material vibrationally damps the article over only a second portion of the temperature range, the first and second portions of the temperature range overlapping.

Useful vibration damping materials may be selected from various materials including rubbery materials, such as urethane rubbers, silicone rubbers, nitrile rubbers, butyl rubbers, acrylic rubbers, natural rubbers, polyester rubbers, isoprene-butadiene rubbers, and styrene butadiene rubbers. Also useful are epoxy-containing materials, plasticized polyvinyl chlorides, urethane-containing materials, acrylate-containing materials, and viscoelastic materials generally. Most preferably, acrylate-based viscoelastic materials are used. The damping structure may further include a relatively stiff metal or polymeric constraining layer which is bonded to the first and second vibration damping materials.

The relative amounts of the first and second vibration damping materials may vary widely depending on the nature of the materials and the particular application. Furthermore, the pattern in which the first and second materials are arranged may also vary substantially. For example, the first and second vibration damping materials may be arranged in a series of parallel stripes which, optionally, may be spaced apart. Alternatively, one of the vibration damping materials may comprise one or more discrete shapes surrounded by the other vibration damping material.

Articles to which the method of the invention may be applied are diverse and include motor vehicle engine components and computer hardware.

### BRIEF DESCRIPTION OF THE DRAWINGS

The invention will be more fully understood with reference to the following drawings in which similar reference numerals designate like or analogous components throughout and in which:
FIG. 1 is a plan view of an article which has been vibrationally damped according to a method of the invention, a portion thereof having been broken away;
FIG. 2 is an elevational view of the article of FIG. 1;
FIG. 3 is an elevational view similar to FIG. 2 and showing a damping structure which includes a stiff, rigid mechanical standoff;
FIG. 4 is an elevational view similar to FIG. 2 and further showing an optional constraining layer;
FIG. 5 is a plan view of an article which has been vibrationally damped according to a method of the invention, a portion thereof having been broken away;
FIG. 6 is a cross-sectional view taken along lines 6--6 of FIG. 5;
FIG. 7 is a plan view similar to FIG. 1 and further showing spacing between the first and second vibration damping materials; and
FIG. 8 is a plan view similar to FIG. 5 and further showing a third vibration damping material.

### DETAILED DESCRIPTION OF THE PREFERRED EMBODIMENTS

In general, the invention relates to a method of vibrationally damping an article subject to resonant vibrations by applying a damping structure to the article. The damping structure comprises first and second vibration damping materials applied to the article and, optionally, a relatively stiff constraining layer that is secured to both damping materials. In an important aspect of the invention, the two vibration damping materials are arranged in a single layer and each is in direct mechanical contact with the article to be damped. The damping structure can provide damping over a broad temperature range. Ideally, each vibration damping material provides damping over only a portion of the temperature range, the portions overlapping so as to provide damping over the entire temperature range.

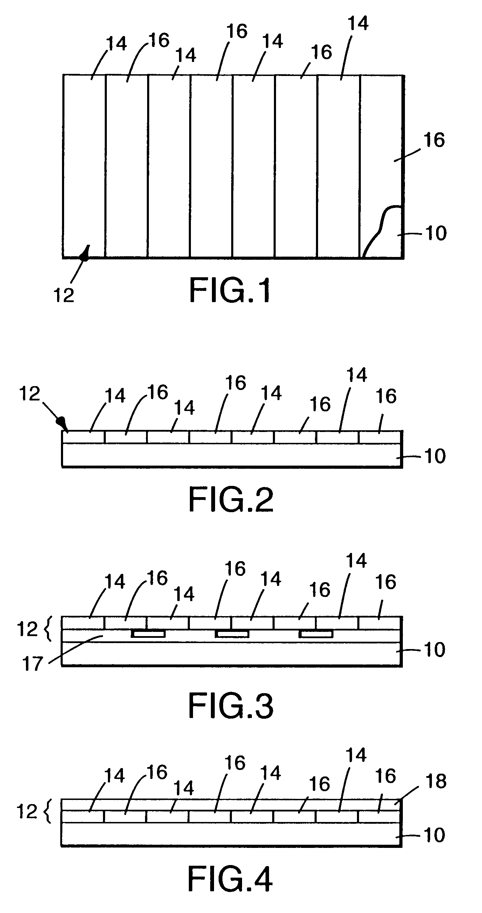

Turning now to the drawings, FIGS. 1 and 2 illustrate an article 10 to which a vibration damping structure 12 has been applied. Vibration damping structure 12 comprises alternating stripes of a first vibration damping material 14 and a second vibration damping material 16. The first and second vibration damping materials are arranged in a single layer and each is in direct mechanical contact with article 10. By "direct mechanical contact" it will be understood that the first and second vibration damping materials form a layer, film or coating on article 10. The layer has opposed major faces, one of which (in FIG. 2) is in direct mechanical contact with article 10. Also included within the concept of "direct mechanical contact" are constructions in which the damping structure further comprises a stiff, rigid mechanical standoff 17, such as shown in the elevational view of FIG. 3, that spaces the first and second vibration damping materials from article 10. The resonant vibrations are directly transmitted through the standoff to the first and second vibration damping materials, each of which is in direct mechanical contact with the standoff. Thus, the first and second materials may be regarded as being in direct mechanical contact with article 10. Standoff 17 may be formed of a stiff, rigid syntactic foam and provides a direct mechanical extension of article 10.

FIG. 4 is an elevational view similar to FIG. 2 but illustrating an alternative embodiment in which damping structure 12 further includes a relatively stiff constraining layer 18 that is secured to the first and second vibration damping materials. The embodiment of FIG. 4 provides constrained layer damping rather than the free-layer damping shown in FIG. 2. The structure of FIG. 3 may also include a constraining layer although this is not shown separately. Additional damping material layers with or without associated constraining layers may be disposed on top of the constraining layer.

The relative amounts of the first and second vibration damping materials can vary over a wide range and will be determined in significant part by the particular application, the nature of the resonant vibrations, the type of article to be damped, environmental conditions, and the properties of the individual vibration damping materials. For example, if article 10 routinely experiences relatively low temperatures and only occasionally experiences relatively high temperatures, it may be appropriate to use relatively larger amounts of a vibration damping material that affords damping at lower temperatures.

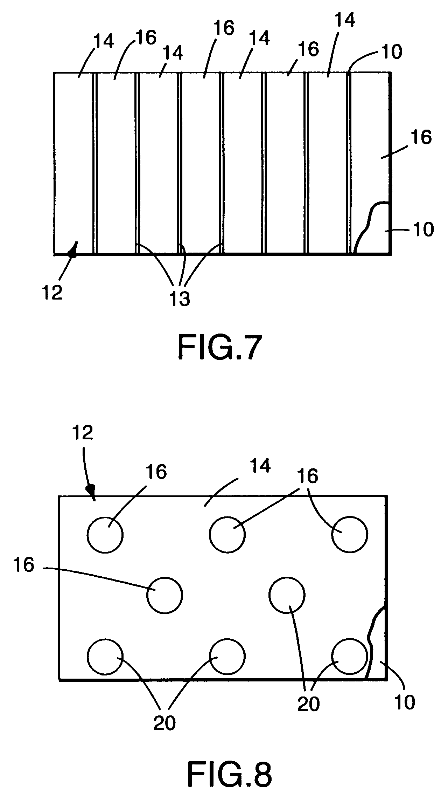

Similarly, although FIG. 1 illustrates the first and second vibration damping materials arranged in a series of parallel stripes, a virtually infinite variety of patterns is possible. For example, the first and second vibration damping materials may be arranged in a wavy or zig-zag pattern. Furthermore, the vibration damping materials need not cover the entire surface of article 10. Also, and as best shown in FIG. 7, the first and second vibration damping materials may be spaced apart so as to provide channels 13 therebetween which may be useful for allowing the venting or flow of liquids or gases.

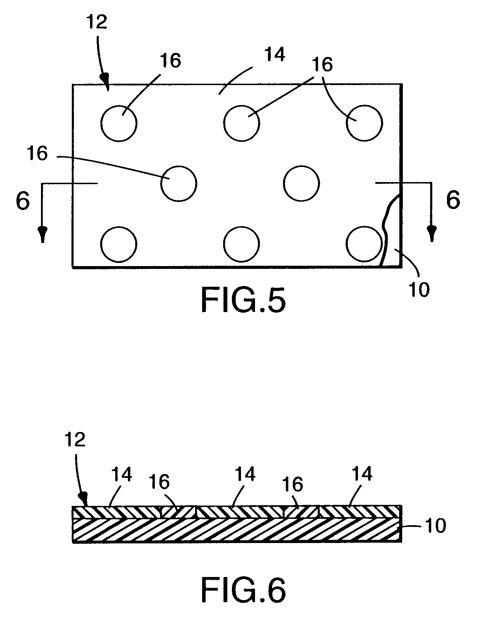

An alternative embodiment is shown in FIGS. 5 and 6. Article 10 has been provided with a vibration damping structure 12 in which second vibration damping material 16 comprises a series of circular dots that are surrounded by an otherwise continuous layer of the first vibration damping material 14. However, the first and second vibration damping materials still comprise a single layer of material and each is in direct mechanical contact with article 10. Although not shown separately in the drawings, the embodiments of FIGS. 5 and 6 may further include a stiff, rigid mechanical standoff such as shown in FIG. 3 and/or a constraining layer such as shown in FIG. 4.

While second vibration damping material is illustrated in FIG. 5 as a series of circular dots, the actual shape, pattern, or relative arrangement is not important. The second vibration damping material could be a series of squares, triangles, ovals or any regular or irregular shape. As noted above in conjunction with FIG. 1, the relative amount of each vibration damping material will vary depending on the particular application. The two materials need not cover the entire surface of article 10.

An alternative embodiment is shown in FIG. 8. Article 10 has been provided with a vibration damping structure 12 in which second vibration damping material 16 and a third vibration damping material 20 each comprise a series of circular dots that are surrounded by an otherwise continuous layer of first vibration damping material 14.

If article 10 is subject to resonant vibrations over a broad temperature range that extends from a lower temperature (for example, about -30°C) to an upper temperature (for example, about 100°C), first vibration damping material 14 preferably provides damping only over a portion of that temperature range as does second vibration damping material 16. Most preferably, the two portions of the range overlap to provide damping over the entire temperature range.

Article 10 may be any structure which is subject to resonant vibrations and which requires damping. A myriad of structures may require damping including articles as diverse as motor vehicle engine components and computer hardware.

The first and second vibration damping materials may be provided by a wide variety of materials, so long as the two materials are not identical. In general, any suitable viscoelastic material may be used. Various rubbery materials may be employed including urethane rubbers, silicone rubbers, nitrile rubbers, butyl rubbers, acrylic rubbers, natural rubbers, styrene-butadiene rubbers, polyester rubbers, and isoprene-butadiene rubbers. Epoxy-containing materials may be used as can plasticized polyvinyl chloride, urethane-containing materials and acrylate-containing materials. Preferred examples of useful damping materials include acrylic-based viscoelastic materials, more preferably, those which are based on acrylates such as, for example, SCOTCHDAMP ISD 110, SCOTCHDAMP ISD 112 and SCOTCHDAMP ISD 113 (3M Company, St. Paul, Minnesota). Blends or composites of any of the foregoing materials may also be used. There are no particular limitations on the thickness of the damping material, the thickness in general being determined by the particular application.

Constraining layer 18 is a relatively stiff material and may be formed from a variety of metals or stiff polymers. Suitable materials include stainless steel, copper, aluminum, iron, nickel, chromium, titanium, cobalt, and alloys thereof. Stiff polymeric materials which may be used include polystyrene, polyvinyl chloride, polyurethane, polycarbonate, polyepoxides, and glass fiber-reinforced plastics such as glass fiber, ceramic fiber, polymeric fiber, and metal fiber reinforced polyesters. Also useful are polyesters, epoxies, polyamides, vinyl esters and polysulfones. Preferably, the constraining layer has a stiffness which approximates that of the vibrating structure and is relatively stiffer (i.e., has a higher shear storage modulus) than the damping materials. The stiffness of the constraining layer may be adjusted by varying the thickness thereof.

In practicing the invention, the first and second damping materials may be coated, silk screened or otherwise applied to a release liner (not shown separately in the drawings) in the desired pattern for transfer application to article 10. The use of heat, pressure, or both heat and pressure may be necessary to provide a secure bond between the damping materials and the article. In the case of the embodiment shown in FIGS. 5 and 6, first damping material 14 may be coated onto a release liner followed by removal of selected portions thereof. Second damping material 16 may then be applied to the removed areas. In those constructions which utilize constraining layer 18, the constraining layer may be laminated or otherwise secured to the first and second vibration damping materials on the release liner. In an alternative approach, the first and second damping materials may be applied directly to the constraining layer by coating, lamination or other similar methods.

The single layer arrangement described herein permits the use of two (or more) different vibration damping materials each of which is in direct mechanical contact with the article to be damped. As a result, the unique properties of the individual damping materials (e.g., damping over a particular temperature range, modulus, thermal conductivity, shock resistance, electrical conductivity etc.) are directly imparted to the article to be damped. Enhanced damping properties are believed possible, especially when damping must be provided over a broader temperature range than is typically associated with one of the damping materials alone.

Similarly, by appropriate selection of the first and second damping materials, both high temperature damping and low temperature shock resistance may be provided, thereby eliminating the need for adhesives or mechanical tabs to secure the damping structure in the event of a low temperature shock. As compared to multilayer constructions in which two or more damping materials are stacked one upon another, the single layer constructions disclosed herein are believed to use less material, add less weight to the article, and provide a lower profile construction as well as being easier to manufacture and less expensive.

Numerous variations and modifications are possible within the scope of the foregoing specification and drawings without departing from the spirit of the invention which is defined in the accompanying claims.

## Claims

1. Method of vibrationally damping an article subject to resonant vibrations, the method comprising a step of applying to the article a vibration damping structure that comprises a first vibration damping material and a second vibration damping material different from the first vibration damping material, the first and second vibration damping materials being arranged in a single layer and each being in direct mechanical contact with the article.

2. Method according to claim 1 characterized in that the first and second vibration damping materials are viscoelastic materials.

3. Method according to claim 1 or 2 characterized in that either the first vibration damping material or the second vibration damping material is selected from the group consisting of urethane rubbers, silicone rubbers, nitrile rubbers, butyl rubbers, acrylic rubbers, natural rubbers, styrene-butadiene rubbers, polyester rubbers, isoprene-butadiene rubbers, epoxy-containing materials, acrylate-containing materials, plasticized polyvinyl chloride, and blends or composites of any of the foregoing materials.

4. Method according to any one of claims 1 to 3 characterized in that both the first and the second vibration damping materials are acrylate-based viscoelastic materials.

5. Method according to any one of the preceding claims characterized in that the vibration damping structure further comprises a relatively stiff constraining layer bonded to the first and second vibration damping materials.

6. Method according to any one of claims 1 to 5 characterized in that the first and second vibration damping materials are arranged as a series of parallel stripes.

7. Method according to claim 6 characterized in that the parallel stripes of the first and second vibration damping materials are spaced apart.

8. Method according to any one of cliams 1 to 7 characterized in that the second vibration damping material comprises one or more discrete shapes surrounded by the first vibration damping material.

9. Method according to any one of the preceding claims characterized in that the vibration damping structure further comprises a stiff, rigid mechanical standoff that spaces the first and second vibration damping materials from the article, the first and second vibration damping materials being in direct mechanical contact with the standoff.

10. Method of vibrationally damping an article subject to resonant vibrations over a temperature range that extends from a lower temperature to an upper temperature, the method comprising a step of applying to the article a vibration damping structure that comprises a first vibration damping material that vibrationally damps the article over only a first portion of the temperature range and a second vibration damping material that vibrationally damps the article over only a second portion of the temperature range, wherein the first and second portions of the temperature range overlap to provide vibration damping over the entire temperature range, and further wherein the first and second vibration damping materials are arranged in a single layer and each is in direct mechanical contact with the article.
